# EUROPÄISCHE PATENTANMELDUNG

(11) **EP 4 424 781 A2**
(43) Veröffentlichungstag der Anmeldung: **04.09.2024**
(21) Anmeldenummer: 24182664.3
(22) Anmeldetag: 20.04.2020
(51) Int. Cl.: C09D 5/00

(54) **GRANULAT UND DARAUS HERGESTELLTES ANSTRICHMITTEL**

(30) Priorität: 18.04.2019 DE 102019110365; 08.07.2019 DE 102019118429
(62) Teilanmeldung aus: 20720802.6
(71) Anmelder: Brillux GmbH & Co. KG, 48163 Münster (DE)
(72) Erfinder: HÖRSTING, Ingo, 48317 Drensteinfurt (DE); LEUSMANN, Jan, 48301 Nottuln (DE); Dr. BENDER, Georg, 49536 Lienen (DE); BERG, Jonas, 48151 Münster (DE)
(74) Vertreter: Cohausz & Florack

(57) **Zusammenfassung**

Dargestellt und beschrieben wird ein Granulat zur Herstellung eines Anstrichmittels, insbesondere einer Dispersionsfarbe, wobei das Granulat, jeweils bezogen auf das Gesamtgewicht des Granulats, a) 2 bis 60 Gew.% Bindemittel, b) 5 bis 85 Gew.% Pigment und/oder Füllstoff und c) 1 bis 15 Gew.% Additive enthält. Durch Zugabe von Wasser kann mit dem Granulat ein Anstrichmittel, insbesondere eine Dispersionsfarbe, hergestellt werden. Vorzugsweise erfolgt die Zugabe des Wassers zum Granulat und die Herstellung des Anstrichmittels, insbesondere der Dispersionsfarbe, direkt in dem Behälter, in dem das Granulat aufbewahrt wird.

## Beschreibung

Die Erfindung betrifft ein Granulat zur Herstellung eines Anstrichmittels, insbesondere einer Dispersionsfarbe, ein Verfahren zur Herstellung des Granulats, die Verwendung des Granulats zur Herstellung eines Anstrichmittels, ein durch Vermischen des Granulats mit Wasser hergestelltes Anstrichmittel sowie einen Behälter, insbesondere einen Farbeimer, enthaltend ein Granulat zur Herstellung eines Anstrichmittels, insbesondere einer Dispersionsfarbe, durch Vermischen des Granulats mit Wasser.

Anstrichmittel wie Dispersionsfarben für den Außen- und Innenbereich sind dem Fachmann grundsätzlich bekannt. Bekannte Anstrichmittel der eingangs genannten Art werden in Gebinden unterschiedlicher Größe, insbesondere in Farbeimern, angeboten. Nachteilig an den auf dem Markt befindlichen Anstrichmitteln ist deren hohes Gewicht, das den Transport erschwert. So wiegt ein 10-Liter-Eimer einer Dispersionsfarbe beispielsweise etwa 15 kg, so dass für den Transport, insbesondere beim Transport von mehreren Eimern, in der Regel ein Handwagen erforderlich ist. Nachteilig an bekannten Dispersionsfarben ist ferner, dass diese aufgrund ihres hohen Wassergehalts von bis zu 40 Gew.% anfällig für mikrobiellen Befall sind. Aus diesem Grund enthalten bekannte Dispersionsfarben in der Regel Konservierungsmittel, um die Lagerstabilität (shelf life) der Farben zu erhöhen. Die Zugabe von Konservierungsmitteln ist jedoch unter anderem aus ökologischen und aus allergenen Gründen unerwünscht.

Der Erfindung liegt daher die Aufgabe zugrunde, die Transportierbarkeit von Anstrichmitteln zu verbessern. Ferner sollen die Anstrichmittel insbesondere wenig oder gar keine Konservierungsmittel enthalten. Darüber hinaus sollen möglichst homogene, insbesondere möglichst klumpenfreie Anstrichmittel bereitgestellt werden können. Idealerweise sollen die Anstrichmittel in einer Form vorliegen, die gut transportierbar ist und/oder wenig oder keine Konservierungsmittel enthält und/oder möglichst wenig oder keine Staubentwicklung zeigt und/oder auch von Verbrauchern eingesetzt werden kann.

Eine oder alle dieser Aufgaben wird erfindungsgemäß durch ein Granulat zur Herstellung eines Anstrichmittels gelöst, wobei das Granulat, jeweils bezogen auf das Gesamtgewicht des Granulats,
a) 2 bis 60 Gew.% Bindemittel,
b) 5 bis 85 Gew.% Pigment und/oder Füllstoff,
c) 1 bis 15 Gew.% Additive
enthält.

Das erfindungsgemäße Granulat eignet sich zur Herstellung eines Anstrichmittels, insbesondere eines verarbeitungsfertigen Anstrichmittels, wobei die Herstellung in einfacher Weise durch Zugabe von Wasser zum Granulat und optionales anschließendes Vermischen der Komponenten, insbesondere Vermischen durch Rühren, erfolgt. Gemäß einer bevorzugten Ausführungsform der Erfindung erfolgt die Zugabe des Wassers und das Vermischen direkt in dem Behälter, in dem das Granulat geliefert wird, also beispielsweise in einem Farbeimer.

Überraschend wurde gefunden, dass mit den vorgenannten Granulaten Anstrichmittel in einer gut transportierbaren Form bereitgestellt werden können. Insbesondere können aus diesen Granulaten von Verbrauchern durch Zugabe von Wasser und optionalem Vermischen im Wesentlichen homogene Anstrichmittel hergestellt werden. Insbesondere durch die stark reduzierte Wassermenge im Granulat ergibt sich eine bis zu 40 %ige Gewichtsersparnis. Beispielsweise wiegt ein 10-Liter-Eimer eines handelsüblichen Anstrichmittels 15 kg, mit dem vorgenannten Granulat kann das Gewicht auf bis zu 9 kg reduziert werden. Derartige Farbeimer sind auch ohne Handwagen transportierbar. Die starke Reduktion der Wassermenge im Granulat bewirkt auch, dass die Farbe weniger anfällig für mikrobiellen Befall ist. Dadurch kann die Menge an Konservierungsmittel reduziert werden oder ganz darauf verzichtet werden.

Durch die Verwendung von Granulat - anstelle von Pulver - wird zudem die Staubentwicklung stark reduziert. Ferner wird durch die Verwendung eines Granulats anstelle von Pulver ein gleichmäßiges und schnelles Anmischen der Farbe gewährleistet, wobei nahezu kein Verklumpen stattfindet. Ohne an eine wissenschaftliche Theorie gebunden sein zu wollen, scheint dies daran zu liegen, dass das Wasser beim Anmischen besser zwischen den Hohlräumen im Granulat und auch in das Granulat eindringen kann als bei einem Pulver. Durch diese homogene Verteilung des Wassers scheint ein gleichmäßiges Erreichen im Granulat durch das Wasser zu erfolgen, wobei das Granulat mit Wasser sehr leicht quellbar ist und in die Einzelsubstanzen zerfällt. Granulate haben zudem eine bessere Rieselfähigkeit gegenüber Pulvern. Granulate haben gegenüber Pulvern zudem eine höhere Schüttdichte.

Überraschenderweise sind die erfindungsgemäßen Granulate enthaltend, jeweils bezogen auf das Gesamtgewicht des Granulats, 2 bis 60 Gew.% Bindemittel, 5 bis 85 Gew.% Pigment und/oder Füllstoff und 1 bis 15 Gew.% Additive außergewöhnlich stabil und fest. Granulate mit diesem Verhältnis an Bindemittel, Pigment und/oder Füllstoff und Additiven weisen kaum bzw. gar keinen Abrieb während des Transports auf und lassen sich gut und schnell in Wasser dispergieren. Dieser Effekt scheint auf das spezifische Zusammenspiel der verschiedenen Bestandteile in den Granulaten zurückzuführen zu sein.

Gemäß einer bevorzugten Ausführungsform enthält das erfindungsgemäße Granulat 3 bis 50 Gew.%, insbesondere 4 bis 40 Gew.%, 5 bis 30 Gew.%, 6 bis 20 Gew.%, 7 bis 17 Gew. %, 8 bis 15 Gew.% oder 9 bis 13 Gew.%, jeweils bezogen auf das Gesamtgewicht des Granulats, Bindemittel. Ein solcher Bindemittelgehalt hat sich als für die Granulierung und Dispergierung besonders vorteilhaft herausgestellt. Mit einem solchen Bindemittelanteil sind die Granulate ferner besonders stabil. Zudem weist das nach dem Dispergieren erhaltene Anstrichmittel bei einem solchen Bindemittelanteil eine besonders gute Nassabriebbeständigkeit auf.

Das im erfindungsgemäßen Granulat eingesetzte Bindemittel sollte sich gut granulieren und redispergieren lassen. Dies ist insbesondere der Fall für Bindemittel ausgewählt aus der Gruppe bestehend aus Poly(Vinylacetat-Alkensäure)-Copolymere, wie Poly(Vinylacetat-Crotonsäure)-Copolymer, Poly(Vinylacetat-Olefin)-Copolymere, wie Poly(Ethylenvinylacetat)-Copolymer, Poly(Vinylacetat-Vinylchlorid-Ethylen)-Copolymer, Poly(Styrol-Acrylsäure)-Copolymer, Poly(Acrylsäure)-Polymer, Poly(Vinylacetat-Vinylester-Ethylen)-Copolymer, Poly(Vinylchlorid-Ethylen)-Copolymer, Poly(Vinylacetat-Ethylen-Methyl(meth)acrylat), Poly(Vinylacetat-Ethylen-Acrylsäureester)-Copolymer, Poly(Vinylchlorid-Ethylen-Vinyllaurat)-Copolymer und Mischungen davon. Die genannten Bindemittel eignen sich besonders gut für das Granulieren der unterschiedlichen Komponenten im Anstrichmittel. Mit den genannten Bindemitteln wird ein stabiles und gleichzeitig gut in Wasser dispergierbares Granulat erhalten.

Gemäß einer bevorzugten Ausführungsform der Erfindung weist das Bindemittel eine Mindestfilmbildetemperatur MFT von kleiner 20 °C, insbesondere von kleiner 15 °C, von kleiner 10 °C, von kleiner 5 °C oder von 0 °C, gemessen nach Norm ISO 2115, insbesondere Norm ISO 2115:1996, auf. Mit einem solchen Bindemittel wird gewährleistet, dass das nach dem Dispergieren der Granulate in Wasser erhaltene Anstrichmittel an der Wand keine Risse aufweist.

Vorzugsweise enthält das erfindungsgemäße Granulat ferner 20 bis 85 Gew.%, insbesondere 20 bis 75 Gew.%, 25 bis 70 Gew.%, 30 bis 60 Gew.%, oder 30 bis 50 Gew.%, jeweils bezogen auf das Gesamtgewicht des Granulats, Füllstoff. Mit einem solchen Anteil an Füllstoff im Granulat wird ein besonders kostengünstiges Granulat erhalten, welches sich gut dispergieren lässt.

Der Füllstoff kann beispielsweise ausgewählt sein aus der Gruppe bestehend aus Dolomit, Bariumsulfat, Feldspat, Quarz, Calciumcarbonat, Glimmer, Kaolin, kalziniertes Kaolin, Talkum, Kunststoffpartikel, Ton, Silika, Diatomeenerde und Mischungen davon. Diese Füllstoffe verteilen sich beim Dispergieren besonders gleichmäßig im wässrigen Anstrichmittel.

Vorzugsweise weist das erfindungsgemäße Granulat ferner einen Wassergehalt, bezogen auf das Gesamtgewicht des Granulats, von weniger als 5 Gew.%, insbesondere weniger als 4 Gew.%, weniger als 3 Gew.%, weniger als 2 Gew.%, weniger als 1 Gew.% oder weniger als 0,5 Gew.%, auf. Vorteilhaft an der Einstellung eines Wassergehalts von kleiner 5 Gew.% ist, dass auf die Zugabe von Konservierungsmitteln verzichtet werden kann. Zudem weisen Granulate mit einem so geringen Anteil an Wasser eine besonders hohe Lagerstabilität auf.

Das erfindungsgemäße Granulat weist vorzugsweise ferner eine mittlere Partikelgröße von 0,1 bis 4 mm, insbesondere von 0,2 bis 3,5 mm, von 0,3 bis 3 mm, von 0,4 bis 2,5 mm, von 0,5 bis 2 mm, von 0,7 bis 1,8 mm oder von 0,8 bis 1,5 mm, auf. Granulate dieser Größe haben sich als besonders geeignet für das Dispergieren in Wasser herausgestellt. Das Wasser kann bei Granulaten dieser Größe gut zwischen den Granulaten durchfließen und gleichzeitig für das Dispergieren ausreichend mit der Oberfläche der Granulate interagieren.

Die mittlere Partikelgröße der Granulate ergibt sich aus der Partikelgrößenverteilung der Granulate. Die Partikelgrößenverteilung wird insbesondere ausgehend von dem volumenäquivalenten Kugeldurchmesser der Partikel bestimmt, wobei der volumenäquivalenten Kugeldurchmesser der Durchmesser einer theoretischen Kugel ist, die das gleiche Volumen wie das Partikel aufweist.

Methoden zur Bestimmung der mittleren Partikelgröße sind dem Fachmann bekannt.

Eine Möglichkeit zur Bestimmung der mittleren Partikelgröße der erfindungsgemäßen Granulate besteht darin, eine statistisch relevante Stichprobe von Granulatteilchen, die mittels Lichtmikroskopie bei einer hundertfachen Vergrößerung aufgenommenen wurden, an einem Computer auszumessen und aus dieser Stichprobe den Mittelwert zu bilden. Als Lichtmikroskop kann hierfür beispielsweise ein Hochpräzisionslichtmikroskop wie beispielsweise das Digital Microscope VHX-500F von KEYENCE^{®} verwendet werden. Anschließend kann mittels STABW-Methode die Standardabweichung innerhalb der Stichprobe ermittelt werden. Es hat sich hierbei als vorteilhaft herausgestellt, wenn die Standardabweichung weniger als 60% vom Mittelwert, insbesondere weniger als 50% vom Mittelwert, beträgt. Bei einer so gleichmäßigen Partikelgrößenverteilung wird eine besonders homogene und gleichmäßige Anstrichfarbe beim Dispergieren erhalten.

Alternativ kann die mittlere Partikelgröße beispielsweise den D₅₀-Wert bezeichnen. Der D₅₀-Wert kann insbesondere die Größe bezeichnen, bei der 50 %, z.B. 50 Gew.-%, kleiner sind als die angegebene Größe. Beispielsweise würden dann 50 %, z.B. 50 Gew.-%, der Partikel eine theoretische Siebweite passieren. Die mittlere Partikelgröße, insbesondere der D₅₀-Wert, kann beispielsweise durch Erstellung einer Partikelgrößenverteilung ermittelt werden. Die Messung kann zum Beispiel mittels Lichtstreuung, insbesondere mittels Laserdiffraktometrie oder Photonenkorrelationsspektroskopie, durchgeführt werden. Insbesondere kann die mittlere Partikelgröße, insbesondere der D₅₀-Wert, in einem gasförmigen Medium, beispielsweise in Luft, gemessen werden. Beispielsweise kann zur Bestimmung der mittleren Partikelgröße, insbesondere des D₅₀-Werts, ein Malvern Mastersizer 2000 oder 3000 eingesetzt werden. Weitere Möglichkeiten zur Bestimmung der mittleren Partikelgröße, insbesondere des D₅₀-Werts, stellen Licht- und/oder Laserbeugung dar. Die mittlere Partikelgröße, insbesondere der D₅₀-Wert, kann auch mittels Siebexperimenten bestimmt werden.

Grundsätzlich kann das erfindungsgemäße Granulat in ganz unterschiedlichen Formen vorliegen. Beispielsweise kann das Granulat eine Zylinderform, eine Kugelform, eine Linsenform, eine rechteckige Form, eine Würfelform oder eine prismatische Form aufweisen. Für das anschließende Dispergieren hat es sich allerdings als besonders vorteilhaft herausgestellt, wenn das erfindungsgemäße Granulat im Wesentlichen kugelförmig ist. In diesem Fall kann das Wasser besonders gut zwischen den Granulat-Teilchen bis zum Boden des Behälters durchlaufen, wodurch ein besonders gleichförmiges Anstrichmittel erhalten wird.

Vorteilhaft ist ferner, wenn das erfindungsgemäße Granulat eine Schüttdichte von 0,5 bis 1,8 g/ml, insbesondere von 0,6 bis 1,5 g/ml oder von 0,9 bis 1,1 g/ml, gemessen nach DIN ISO 697, insbesondere DIN ISO 697:1984-01, aufweist. Auf diese Weise kann ein besonders schnelles und homogenes Vermischen des Granulats mit Wasser ohne Klumpenbildung erreicht werden. Zudem ist das Granulat bei einer solchen Schüttdichte besonders volumensparend, wodurch Lagerung und Transport des Materials verbessert werden.

Dem Fachmann sind Verfahren zur Bestimmung der Schüttdichte bekannt. Beispielsweise lässt sich die Schüttdichte gemäß Norm DIN ISO 697 mit einem Schüttdichte-Messgerät Typ SMG 697 mit einem 500 ml Messbecher von powtec^{®} Maschinen und Engineering GmbH messen.

Das erfindungsgemäße Granulat enthält vorzugsweise 5 bis 60 Gew.%, insbesondere 15 bis 30 Gew.%, jeweils bezogen auf das Gesamtgewicht des Granulats, Pigment. Dieser Anteil an Pigment lässt sich sehr gut in Granulate einbinden. Zudem lässt sich mit einem solchen Anteil an Pigment im Granulat ein Anstrichmittel mit hervorragenden optischen Eigenschaften herstellen.

Geeignete Pigmente können beispielsweise ausgewählt sein aus der Gruppe bestehend aus Titandioxid, Eisenoxidgelb, Arylid (Monoazo), Bismutvanadat, (Di-)Arylide, Azokondensationspigmente, Pyranthone, Isoindoline, Anthrachinone, Derivate von Dioxazinen, Perinone, Naphtol-AS-Derivate, Perylene, Indanthrene, Phthalocyanine, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment, Pigment Violet 23, und Mischungen daraus. Diese Pigmente eignen sich sehr gut für das Redispergieren der Granulate in Wasser und ergeben Anstrichmittel mit ansprechenden optischen Eigenschaften. Die genannten Pigmente ermöglichen zudem eine breite Palette an unterschiedlichen Farben und Farbkombinationen.

Das erfindungsgemäße Granulat kann ferner mindestens ein Additiv aus der Gruppe bestehend aus Netz- und Dispergiermittel, Entschäumer, Rheologieadditiv, Anti-Ausschwimmmittel, Verlaufsmittel, Gleitmittel, Quellmittel und Mattierungsmittel enthalten. Mit Additiven aus der genannten Gruppe können aus den Granulaten Anstrichmittel mit guten Streicheigenschaften und guter Applizierbarkeit erhalten werden. Zudem kann die Stabilität der Granulate mit Additiven aus der genannten Gruppe erhöht werden.

Vorzugsweise enthält das erfindungsgemäße Granulat keine Konservierungsstoffe bzw. ist im Wesentlichen frei von Konservierungsstoffen. Auf diese Weise wird aus den Granulaten ein Anstrichmittel erhalten, das besonders hohen Umweltanforderungen gerecht wird.

Gemäß einer bevorzugten Ausführungsform besteht das erfindungsgemäße Granulat im Wesentlichen aus 2 bis 60 Gew.% Bindemittel, 5 bis 85 Gew.% Pigment und/oder Füllstoff und 1 bis 15 Gew.% Additive, jeweils bezogen auf das Gesamtgewicht des Granulats. Wenn hier davon die Rede ist, dass das Granulat im Wesentlichen aus den genannten Bestandteilen besteht, ist damit gemeint, dass mindestens 95 Gew.%, insbesondere mindestens 97 Gew.%, vorzugsweise mindestens 98 Gew.% oder weiter bevorzugt mindestens 99 Gew.% des Granulats, jeweils bezogen auf das Gesamtgewicht des Granulats, aus den genannten Bestandteilen besteht. Besonders vorteilhaft ist es, wenn die 1 bis 15 Gew.% Additive aus Rheologieadditiven, Netzmitteln, Dispergiermitteln, Entschäumern, Verlaufsmitteln, Gleitmitteln und/oder Quellmitteln bestehen. Diese Granulate lassen sich besonders gut mit Wasser zu gut applizierbaren Anstrichmitteln dispergieren.

Gemäß einer anderen Ausführungsform besteht das erfindungsgemäße Granulat aus 2 bis 60 Gew.% Bindemittel, 5 bis 85 Gew.% Pigment und/oder Füllstoff und 1 bis 15 Gew.% Additive, jeweils bezogen auf das Gesamtgewicht des Granulats.

Gegenstand der Erfindung ist ferner ein Verfahren zur Herstellung eines Granulats mindestens umfassend die Schritte
a. Bereitstellen einer wässrigen Dispersion enthaltend, jeweils bezogen auf den Feststoffanteil der Dispersion,
   i. 2 bis 60 Gew.% Bindemittel,
   ii. 5 bis 85 Gew.% Pigment und/oder Füllstoff,
   iii. 1 bis 15 Gew.% Additive und
b. Granulieren der in a. bereitgestellten Dispersion zu einem Granulat,
c. Einstellen des Wassergehalts des Granulats auf weniger als 5 Gew.%, bezogen auf das Gesamtgewicht des Granulats.

Die wässrige Dispersion in Schritt a. des erfindungsgemäßen Verfahrens enthält vorzugsweise 40 bis 80 Gew.% Wasser, bezogen auf das Gesamtgewicht der Dispersion. Mit diesem Anteil an Wasser lässt sich die Dispersion besonders gut granulieren.

Gemäß einer bevorzugten Ausführungsform des erfindungsgemäßen Verfahrens erfolgt das Einstellen des Wassergehalts gemäß Verfahrensschritt c. im Zuge des Granulierens in Verfahrensschritt b. Auf diese Weise kann der Wassergehalt in technisch einfacher und kostengünstiger Weise eingestellt werden.

Vorzugsweise wird der Wassergehalt des Granulats im erfindungsgemäßen Verfahren auf weniger als 4 Gew.%, weniger als 3 Gew.%, weniger als 2 Gew.%, weniger als 1 Gew.% oder weniger als 0,5 Gew.%, bezogen auf das Gesamtgewicht des Granulats, eingestellt. Granulate mit einem so geringen Anteil an Wasser haben eine besonders hohe Lagerstabilität.

Die wässrige Dispersion in Schritt a. des erfindungsgemäßen Verfahrens weist vorzugsweise einen Feststoffanteil von 20 bis 60 Gew.%, insbesondere von 30 bis 50 Gew.% oder von 35 bis 45 Gew.%, bezogen auf das Gesamtgewicht der Dispersion, auf. Auf diese Weise lassen sich gleichmäßige und stabile Granulate erhalten und es kommt nicht zu Unregelmäßigkeiten bei der Granulierung.

Gemäß einer besonders bevorzugten Ausführungsform des erfindungsgemäßen Verfahrens erfolgt das Granulieren der in a. bereitgestellten Dispersion mittels Sprühgranulation. Auf diese Weise wird ein staubfreies Granulat erhalten, das sich durch eine kompakte und feste Struktur auszeichnet. Durch das gleichmäßige Wachstum der Granulate in der Sprühgranulation kann der Aufbau von besonders homogenen Granulatteilchen erzielt werden. Die Größe und Größenverteilung der Granulatteilchen lässt sich zudem mittels Sprühgranulation besonders gut einstellen.

In einer ganz besonders bevorzugten Ausführungsform des erfindungsgemäßen Verfahrens erfolgt das Granulieren mittels Sprühgranulation in einem Wirbelschichtreaktor. Mittels dieser besonders bevorzugten Ausführungsform werden besonders stabile und homogene Granulate erhalten. Das Granulatwachstum lässt sich in der Wirbelschicht besonders gut steuern und modifizieren. Zudem kann mittels Sprühgranulation im Wirbelschichtreaktor auf sehr effiziente Weise ein geringer Wassergehalt bzw. eine geringe Restfeuchte eingestellt werden.

Besonders gute Ergebnisse lassen sich erzielen, wenn die Sprühgranulation so ausgeführt wird, dass die Ablufttemperatur im Wirbelschichtreaktor weniger als 100 °C, insbesondere weniger als 50 °C oder weniger als 35 °C, beträgt. Auf diese Weise wird sichergestellt, dass es zu keinem Aufweichen der Granulate im Wirbelschichtreaktor kommen kann.

Gemäß einer weiteren vorteilhaften Ausgestaltung des erfindungsgemäßen Verfahrens beträgt die Produkttemperatur im Wirbelschichtreaktor weniger als 80 °C, insbesondere weniger als 50 °C oder weniger als 35 °C. Bei einer solchen Produkttemperatur ist das Granulat besonders stabil und es kommt zu keinem Aufweichen des Granulats.

Gemäß einer weiteren bevorzugten Ausführungsform beträgt die Zulufttemperatur im Wirbelschichtreaktor von 30 bis 150 °C, insbesondere von 50 bis 100 °C oder von 60 bis 80 °C, beträgt. Bei einer solchen Zulufttemperatur findet eine effiziente Trocknung der sich bildenden Granulate im Wirbelschichtreaktor statt, ohne dass es zu einem teilweisen Aufweichen des Bindemittels im Granulat kommt.

Es hat sich herausgestellt, dass die Granulierung der in a. bereitgestellten wässrigen Dispersion besonders gut gelingt, wenn sowohl die Abluft-, als auch die Zuluft- und die Produkttemperatur in den beschriebenen bevorzugten Bereichen gewählt ist. Auf diese Weise lassen sich eine gleichmäßige Granulierung und eine genaue Einstellung des Wassergehalts des Granulats erzielen. Mit den genannten Temperaturparametern lässt sich das Granulat besonders gut trocknen und es kommt zu keinem unerwünschten Verkleben von Granulatteilchen an den Wänden des Wirbelschichtreaktors.

Das im erfindungsgemäßen Verfahren eingesetzte Bindemittel weist vorzugsweise eine Mindestfilmbildetemperatur MFT von kleiner 20 °C, insbesondere von kleiner 15 °C, von kleiner 10 °C, von kleiner 5 °C oder von 0 °C, gemessen nach Norm ISO 2115, auf. Bindemittel mit einer solchen Mindestfilmbildetemperatur eignen sich besonders gut für das erfindungsgemäße Verfahren. Mit solchen Bindemitteln wird sichergestellt, dass die Granulate besonders gleichmäßig sind und keine Unregelmäßigkeiten in den Granulaten während der Granulierung auftreten können.

Im Übrigen gilt für das erfindungsgemäße Verfahren, insbesondere für die zu verwendenden Inhaltsstoffe, das oben für das erfindungsgemäße Granulat Gesagte.

Mit dem erfindungsgemäßen Granulat kann in besonders einfacher Weise ein Anstrichmittel, insbesondere eine Dispersionsfarbe, hergestellt werden. Dazu ist lediglich die Zugabe von Wasser und ein anschließendes Vermischen von Granulat und Wasser erforderlich. Gegenstand der Erfindung ist daher auch ein Verfahren zur Herstellung eines Anstrichmittels mindestens umfassend die Schritte
a. Bereitstellen des erfindungsgemäßen Granulats und
b. Mischen des Granulats mit Wasser zur Herstellung des Anstrichmittels.

Dabei beträgt das Gewichtsverhältnis von Granulat zu Wasser vorzugsweise von 10:90 bis 90:10, insbesondere von 20:80 bis 80:20 oder von 30:70 bis 70:30 oder von 50:50 bis 65:35. Bei solchen Gewichtsverhältnissen von Granulat zu Wasser wird ein besonders gut applizierbares Anstrichmittel erhalten.

Die vorliegende Erfindung betrifft ferner die Verwendung eines erfindungsgemäßen Granulats zur Herstellung eines Anstrichmittels, wobei es sich insbesondere bei dem Anstrichmittel um eine Dispersionsfarbe handelt.

Die Zugabe von Wasser zum Granulat und das Anmachen des Anstrichmittels erfolgt vorzugsweise in einem geeigneten Behälter, insbesondere in einem Farbeimer. Vorzugsweise handelt es sich dabei um den Behälter, in dem auch das erfindungsgemäße Granulat vertrieben wird. Gegenstand der Erfindung ist demgemäß ferner ein Behälter, insbesondere ein Farbeimer, enthaltend erfindungsgemäßes Granulat. Gemäß einer bevorzugten Ausführungsform der Erfindung ist der Behälter so dimensioniert, dass er zur Aufnahme von Wasser und Anmischen eines Anstrichmittels geeignet ist. Weiter bevorzugt sollte der Behälter im Wesentlichen luftdicht verschließbar, insbesondere wiederverschließbar, und zur Aufbewahrung des Anstrichmittels geeignet sein. Zur Erleichterung der Bestimmung der zum Anmachen des Anstrichmittels erforderlichen Wassermenge kann der Behälter, insbesondere der wiederverschließbare Farbeimer, eine Markierung aufweisen, die den Füllstand des einzufüllenden Wassers kennzeichnet, z.B. in Form eines Füllstrichs.

Auf diese Weise wird ein besonders einfaches und anwenderfreundliches Anmachen des Anstrichmittels ermöglicht.

Die Erfindung wird im Folgenden durch ein Beispiel näher erläutert, welches jedoch nur der Veranschaulichung dient und nicht limitierend ist.

### Beispiel

Eine wässrige Komponente A wurde mit den in Tabelle 1 aufgeführten Inhaltsstoffen vorbereitet und vermischt.

**Tabelle 1: Mengen jeweils bezogen auf das Gesamtgewicht der Komponente A**

| **Inhaltsstoff** | **Menge in Gew.%** |
|---|---|
| Wasser | 38,15 |
| Füllstoff | 45,51 |
| Pigment | 12,36 |
| Netzmittel | 0,34 |
| Entschäumer | 0,28 |
| Rheologieadditiv | 3,36 |

Anschließend wurde die wässrige Bindemittelkomponente B mit den in Tabelle 2 aufgeführten Inhaltsstoffen bereitgestellt.

**Tabelle 2: Mengen jeweils bezogen auf das Gesamtgewicht der Komponente B**

| **Inhaltsstoff** | **Menge in Gew.%** |
|---|---|
| Wasser | 50 |
| Bindemittel (basierend auf Copolymer aus Vinylacetat und Ethylen) | 50 |

Die Komponenten A und B wurden in einer weiteren Menge Wasser aufgenommen, wobei 6,16 kg Komponente A, 0,84 kg Komponente B und 1,26 kg Wasser eingesetzt wurden. Diese Mischung wurde dann in einem Wirbelschichtreaktor sprühgranuliert, wobei die Zulufttemperatur von 60 bis 80 °C, die Ablufttemperatur von 40 bis 45 °C und die Produkttemperatur weniger als 40 °C betrug. Das Produkt trocknete und granulierte gut, ein Erweichen des Produkts konnte nicht beobachtet werden. Es wurden 3,0 kg eines Granulats mit einer mittleren Partikelgröße von 0,311 mm und einer Restfeuchte von weniger als 1 Gew.%, bezogen auf das Gesamtgewicht der Granulate, erhalten.

Die auf diese Weise erhaltenen Granulate wurden anschließend in einen Farbeimer gefüllt und es wurden 2 kg Wasser auf die 3 kg Granulat im Farbeimer gegossen. Das Wasser konnte sich gut zwischen den Granulatteilchen verteilen. Anschließend wurde die Mischung manuell zweimal umgerüht. Direkt nach dem Umrühren konnte die erhaltene Dispersionsfarbe mit einem Malerpinsel aufgenommen und zur Streichung einer Oberfläche genutzt werden.

Die in den nachfolgenden Punkten beschriebenen Gegenstände stellen weitere Ausführungsformen der Erfindung dar:
1. Granulat zur Herstellung eines Anstrichmittels, wobei das Granulat, jeweils bezogen auf das Gesamtgewicht des Granulats,
   a) 2 bis 60 Gew.% Bindemittel,
   b) 5 bis 85 Gew.% Pigment und/oder Füllstoff,
   c) 1 bis 15 Gew.% Additive
   enthält.
2. Granulat nach Punkt 1, **dadurch gekennzeichnet, dass** das Granulat zur Herstellung eines Anstrichmittels, insbesondere eines verarbeitungsfertigen Anstrichmittels, geeignet ist, wobei die Herstellung durch Zugabe von Wasser zum Granulat und optionales anschließendes Vermischen der Komponenten, insbesondere Vermischen durch Rühren, erfolgt.
3. Granulat nach einem der Punkte 1 oder 2, **dadurch gekennzeichnet, dass** das Granulat 3 bis 50 Gew.%, insbesondere 4 bis 40 Gew.%, 5 bis 30 Gew.%, 6 bis 20 Gew.%, 7 bis 17 Gew. %, 8 bis 15 Gew.% oder 9 bis 13 Gew.%, jeweils bezogen auf das Gesamtgewicht des Granulats, Bindemittel enthält.
4. Granulat nach einem der vorstehenden Punkte, **dadurch gekennzeichnet, dass** das Bindemittel ausgewählt ist aus der Gruppe bestehend aus Poly(Vinylacetat-Alkensäure)-Copolymere, wie Poly(Vinylacetat-Crotonsäure)-Copolymer, Poly(Vinylacetat-Olefin)-Copolymere, wie Poly(Ethylenvinylacetat)-Copolymer, Poly(Vinylacetat-Vinylchlorid-Ethylen)-Copolymer, Poly(Styrol-Acrylsäure)-Copolymer, Poly(Acrylsäure)-Polymer, Poly(Vinylacetat-Vinylester-Ethylen)-Copolymer, Poly(Vinylchlorid-Ethylen)-Copolymer, Poly(Vinylacetat-Ethylen-Methyl(meth)acrylat), Poly(Vinylacetat-Ethylen-Acrylsäureester)-Copolymer, Poly(Vinylchlorid-Ethylen-Vinyllaurat)-Copolymer und Mischungen davon.
5. Granulat nach einem der vorstehenden Punkte, **dadurch gekennzeichnet, dass** das Bindemittel eine Mindestfilmbildetemperatur MFT von kleiner 20 °C, insbesondere von kleiner 15 °C, von kleiner 10 °C, von kleiner 5 °C oder von 0 °C, gemessen nach Norm ISO 2115, aufweist.
6. Granulat nach einem der vorstehenden Punkte, **dadurch gekennzeichnet, dass** das Granulat 20 bis 85 Gew.%, insbesondere 20 bis 75 Gew.%, 25 bis 70 Gew.%, 30 bis 60 Gew.%, oder 30 bis 50 Gew.%, jeweils bezogen auf das Gesamtgewicht des Granulats, Füllstoff enthält.
7. Granulat nach einem der vorstehenden Punkte, **dadurch gekennzeichnet, dass** der Füllstoff ausgewählt ist aus der Gruppe bestehend aus Dolomit, Bariumsulfat, Feldspat, Quarz, Calciumcarbonat, Glimmer, Kaolin, kalziniertes Kaolin, Talkum, Kunststoffpartikel, Ton, Silika, Diatomeenerde und Mischungen davon.
8. Granulat nach einem der vorstehenden Punkte, **dadurch gekennzeichnet, dass** das Granulat einen Wassergehalt, bezogen auf das Gesamtgewicht des Granulats, von weniger als 5 Gew.%, insbesondere weniger als 4 Gew.%, weniger als 3 Gew.%, weniger als 2 Gew.%, weniger als 1 Gew.% oder weniger als 0,5 Gew.%, aufweist.
9. Granulat nach einem der vorstehenden Punkte, **dadurch gekennzeichnet, dass** das Granulat eine mittlere Partikelgröße von 0,1 bis 4 mm, insbesondere von 0,2 bis 3,5 mm, von 0,3 bis 3 mm, von 0,4 bis 2,5 mm, von 0,5 bis 2 mm, von 0,7 bis 1,8 mm oder von 0,8 bis 1,5 mm, aufweist.
10. Granulat nach einem der vorstehenden Punkte, **dadurch gekennzeichnet, dass** das Granulat im Wesentlichen kugelförmig ist.
11. Granulat nach einem der vorstehenden Punkte, **dadurch gekennzeichnet, dass** das Granulat eine Schüttdichte von 0,5 bis 1,8 g/ml, insbesondere von 0,6 bis 1,5 g/ml oder von 0,9 bis 1,1 g/ml, gemessen nach DIN ISO 697, aufweist.
12. Granulat nach einem der vorstehenden Punkte, **dadurch gekennzeichnet, dass** das Granulat 5 bis 60 Gew.%, insbesondere 15 bis 30 Gew.%, jeweils bezogen auf das Gesamtgewicht des Granulats, Pigment enthält.
13. Granulat nach einem der vorstehenden Punkte, **dadurch gekennzeichnet, dass** das Pigment ausgewählt ist aus der Gruppe bestehend aus Titandioxid, Eisenoxidgelb, Arylid (Monoazo), Bismutvanadat, (Di-)Arylide, Azokondensationspigmente, Pyranthone, Isoindoline, Anthrachinone, Derivate von Dioxazinen, Perinone, Naphtol-AS-Derivate, Perylene, Indanthrene, Phthalocyanine, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment, Pigment Violet 23, und Mischungen davon.
14. Granulat nach einem der vorstehenden Punkte, **dadurch gekennzeichnet, dass** das Granulat mindestens ein Additiv aus der Gruppe bestehend aus Netz- und Dispergiermittel, Entschäumer, Rheologieadditiv, Anti-Ausschwimmmittel, Verlaufsmittel, Gleitmittel, Quellmittel und Mattierungsmittel enthält.
15. Granulat nach einem der vorstehenden Punkte, **dadurch gekennzeichnet, dass** das Granulat im Wesentlichen frei von Konservierungsstoffen ist.
16. Verfahren zur Herstellung eines Granulats, insbesondere eines Granulats nach einem der Punkte 1 bis 15, mindestens umfassend die Schritte
   a. Bereitstellen einer wässrigen Dispersion enthaltend, jeweils bezogen auf den Feststoffanteil der Dispersion,
      i. 2 bis 60 Gew.% Bindemittel,
      ii. 5 bis 85 Gew.% Pigment und/oder Füllstoff,
      iii. 1 bis 15 Gew.% Additive
   b. Granulieren der in a. bereitgestellten Dispersion zu einem Granulat,
   c. Einstellen des Wassergehalts des Granulats auf weniger als 5 Gew.%, bezogen auf das Gesamtgewicht des Granulats.
17. Verfahren nach Punkt 16, **dadurch gekennzeichnet, dass** die wässrige Dispersion in Schritt a. 40 bis 80 Gew.% Wasser, bezogen auf das Gesamtgewicht der Dispersion, enthält.
18. Verfahren nach einem der Punkte 16 oder 17, **dadurch gekennzeichnet, dass** das Einstellen des Wassergehalts gemäß Verfahrensschritt c. im Zuge des Granulierens in Verfahrensschritt b. erfolgt.
19. Verfahren nach einem der Punkte 16 bis 18, **dadurch gekennzeichnet, dass** der Wassergehalt des Granulats auf weniger als 4 Gew.%, weniger als 3 Gew.%, weniger als 2 Gew.%, weniger als 1 Gew.% oder weniger als 0,5 Gew.%, bezogen auf das Gesamtgewicht des Granulats, eingestellt wird.
20. Verfahren nach einem der Punkte 16 bis 19, **dadurch gekennzeichnet, dass** die wässrige Dispersion einen Feststoffanteil von 20 bis 60 Gew.%, insbesondere von 30 bis 50 Gew.% oder von 35 bis 45 Gew.%, bezogen auf das Gesamtgewicht der Dispersion, aufweist.
21. Verfahren nach einem der Punkte 16 bis 20, **dadurch gekennzeichnet, dass** das Granulieren der in a. bereitgestellten Dispersion mittels Sprühgranulation erfolgt.
22. Verfahren nach Punkt 21, **dadurch gekennzeichnet, dass** das Granulieren mittels Sprühgranulation in einem Wirbelschichtreaktor erfolgt.
23. Verfahren nach Punkt 22, **dadurch gekennzeichnet, dass** die Ablufttemperatur im Wirbelschichtreaktor weniger als 100 °C, insbesondere weniger als 50 °C oder weniger als 35 °C, beträgt.
24. Verfahren nach Punkt 22 oder 23, **dadurch gekennzeichnet, dass** die Produkttemperatur im Wirbelschichtreaktor weniger als 80 °C, insbesondere weniger als 50 °C oder weniger als 35 °C, beträgt.
25. Verfahren nach einem der Punkte 22 bis 24, **dadurch gekennzeichnet, dass** die Zulufttemperatur im Wirbelschichtreaktor von 30 bis 150 °C, insbesondere von 50 bis 100 °C oder von 60 bis 80 °C, beträgt.
26. Verfahren nach einem der Punkte 16 bis 25, **dadurch gekennzeichnet, dass** das Bindemittel eine Mindestfilmbildetemperatur MFT von kleiner 20 °C, insbesondere von kleiner 15 °C, von kleiner 10 °C, von kleiner 5 °C oder von 0 °C, gemessen nach Norm ISO 2115, aufweist.
27. Granulat erhältlich durch ein Verfahren gemäß einem der Punkte 16 bis 26.
28. Verfahren zur Herstellung eines Anstrichmittels mindestens umfassend die Schritte
   a. Bereitstellen eines Granulats gemäß einem der Punkte 1 bis 15 oder 27,
   b. Mischen des Granulats mit Wasser zur Herstellung des Anstrichmittels.
29. Verfahren nach Punkt 28, **dadurch gekennzeichnet, dass** das Gewichtsverhältnis von Granulat zu Wasser von 10:90 bis 90:10, insbesondere von 20:80 bis 80:20 oder von 30:70 bis 70:30 oder von 50:50 bis 65:35, beträgt.
30. Verwendung eines Granulats gemäß einem der Punkte 1 bis 15 oder 27 zur Herstellung eines Anstrichmittels.
31. Verwendung nach Punkt 30, **dadurch gekennzeichnet, dass** es sich bei dem Anstrichmittel um eine Dispersionsfarbe handelt.
32. Behälter zum Anmischen eines Anstrichmittels, wobei der Behälter ein Granulat gemäß einem der Punkte 1 bis 15 oder 27 umfasst.
33. Behälter nach Punkt 32, **dadurch gekennzeichnet, dass** der Behälter so dimensioniert ist, dass er zur Aufnahme von Wasser und Anmischen eines Anstrichmittels geeignet ist.
34. Behälter nach Punkt 32 oder 33, **dadurch gekennzeichnet, dass** der Behälter im Wesentlichen luftdicht verschließbar und zur Aufbewahrung des Anstrichmittels geeignet ist.
35. Behälter nach Punkt 34, **dadurch gekennzeichnet, dass** der Behälter wiederverschließbar ist.
36. Behälter nach einem der Punkte 32 bis 35, **dadurch gekennzeichnet, dass** der Behälter eine Markierung aufweist, die den Füllstand des einzufüllenden Wassers kennzeichnet.

## Patentansprüche

1. Granulat zur Herstellung eines Anstrichmittels, wobei das Granulat, jeweils bezogen auf das Gesamtgewicht des Granulats,
a) 2 bis 60 Gew.% Bindemittel,
b) 5 bis 85 Gew.% Pigment und/oder Füllstoff,
c) 1 bis 15 Gew.% Additive
enthält.

2. Granulat nach Anspruch 1, **dadurch gekennzeichnet, dass** das Granulat zur Herstellung eines Anstrichmittels, insbesondere eines verarbeitungsfertigen Anstrichmittels, geeignet ist, wobei die Herstellung durch Zugabe von Wasser zum Granulat und optionales anschließendes Vermischen der Komponenten, insbesondere Vermischen durch Rühren, erfolgt,
und/oder
**dadurch gekennzeichnet, dass** das Granulat 3 bis 50 Gew.%, insbesondere 4 bis 40 Gew.%, 5 bis 30 Gew.%, 6 bis 20 Gew.%, 7 bis 17 Gew. %, 8 bis 15 Gew.% oder 9 bis 13 Gew.%, jeweils bezogen auf das Gesamtgewicht des Granulats, Bindemittel enthält,
und/oder
**dadurch gekennzeichnet, dass** das Bindemittel ausgewählt ist aus der Gruppe bestehend aus Poly(Vinylacetat-Alkensäure)-Copolymere, wie Poly(Vinylacetat-Crotonsäure)-Copolymer, Poly(Vinylacetat-Olefin)-Copolymere, wie Poly(Ethylenvinylacetat)-Copolymer, Poly(Vinylacetat-Vinylchlorid-Ethylen)-Copolymer, Poly(Styrol-Acrylsäure)-Copolymer, Poly(Acrylsäure)-Polymer, Poly(Vinylacetat-Vinylester-Ethylen)-Copolymer, Poly(Vinylchlorid-Ethylen)-Copolymer, Poly(Vinylacetat-Ethylen-Methyl(meth)acrylat), Poly(Vinylacetat-Ethylen-Acrylsäureester)-Copolymer, Poly(Vinylchlorid-Ethylen-Vinyllaurat)-Copolymer und Mischungen davon,
und/oder
**dadurch gekennzeichnet, dass** das Bindemittel eine Mindestfilmbildetemperatur MFT von kleiner 20 °C, insbesondere von kleiner 15 °C, von kleiner 10 °C, von kleiner 5 °C oder von 0 °C, gemessen nach Norm ISO 2115, aufweist.

3. Granulat nach einem der Ansprüche 1 oder 2, **dadurch gekennzeichnet, dass** das Granulat 20 bis 85 Gew.%, insbesondere 20 bis 75 Gew.%, 25 bis 70 Gew.%, 30 bis 60 Gew.%, oder 30 bis 50 Gew.%, jeweils bezogen auf das Gesamtgewicht des Granulats, Füllstoff enthält,
und/oder
**dadurch gekennzeichnet, dass** der Füllstoff ausgewählt ist aus der Gruppe bestehend aus Dolomit, Bariumsulfat, Feldspat, Quarz, Calciumcarbonat, Glimmer, Kaolin, kalziniertes Kaolin, Talkum, Kunststoffpartikel, Ton, Silika, Diatomeenerde und Mischungen davon.

4. Granulat nach einem der vorstehenden Ansprüche, **dadurch gekennzeichnet, dass** das Granulat einen Wassergehalt, bezogen auf das Gesamtgewicht des Granulats, von weniger als 5 Gew.%, insbesondere weniger als 4 Gew.%, weniger als 3 Gew.%, weniger als 2 Gew.%, weniger als 1 Gew.% oder weniger als 0,5 Gew.%, aufweist,
und/oder
**dadurch gekennzeichnet, dass** das Granulat eine mittlere Partikelgröße von 0,1 bis 4 mm, insbesondere von 0,2 bis 3,5 mm, von 0,3 bis 3 mm, von 0,4 bis 2,5 mm, von 0,5 bis 2 mm, von 0,7 bis 1,8 mm oder von 0,8 bis 1,5 mm, aufweist, und/oder
**dadurch gekennzeichnet, dass** das Granulat im Wesentlichen kugelförmig ist,
und/oder
**dadurch gekennzeichnet, dass** das Granulat eine Schüttdichte von 0,5 bis 1,8 g/ml, insbesondere von 0,6 bis 1,5 g/ml oder von 0,9 bis 1,1 g/ml, gemessen nach DIN ISO 697, aufweist.

5. Granulat nach einem der vorstehenden Ansprüche, **dadurch gekennzeichnet, dass** das Granulat 5 bis 60 Gew.%, insbesondere 15 bis 30 Gew.%, jeweils bezogen auf das Gesamtgewicht des Granulats, Pigment enthält,
und/oder
**dadurch gekennzeichnet, dass** das Pigment ausgewählt ist aus der Gruppe bestehend aus Titandioxid, Eisenoxidgelb, Arylid (Monoazo), Bismutvanadat, (Di-)Arylide, Azokondensationspigmente, Pyranthone, Isoindoline, Anthrachinone, Derivate von Dioxazinen, Perinone, Naphtol-AS-Derivate, Perylene, Indanthrene, Phthalocyanine, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment, Pigment Violet 23, und Mischungen davon,
und/oder
**dadurch gekennzeichnet, dass** das Granulat mindestens ein Additiv aus der Gruppe bestehend aus Netz- und Dispergiermittel, Entschäumer, Rheologieadditiv, Anti-Ausschwimmmittel, Verlaufsmittel, Gleitmittel, Quellmittel und Mattierungsmittel enthält,
und/oder
**dadurch gekennzeichnet, dass** das Granulat im Wesentlichen frei von Konservierungsstoffen ist.

6. Verfahren zur Herstellung eines Granulats, insbesondere eines Granulats nach einem der Ansprüche 1 bis 5, mindestens umfassend die Schritte
a. Bereitstellen einer wässrigen Dispersion enthaltend, jeweils bezogen auf den Feststoffanteil der Dispersion,
i. 2 bis 60 Gew.% Bindemittel,
ii. 5 bis 85 Gew.% Pigment und/oder Füllstoff,
iii. 1 bis 15 Gew.% Additive
b. Granulieren der in a. bereitgestellten Dispersion zu einem Granulat,
c. Einstellen des Wassergehalts des Granulats auf weniger als 5 Gew.%, bezogen auf das Gesamtgewicht des Granulats.

7. Verfahren nach Anspruch 6, **dadurch gekennzeichnet, dass** die wässrige Dispersion in Schritt a. 40 bis 80 Gew.% Wasser, bezogen auf das Gesamtgewicht der Dispersion, enthält,
und/oder
**dadurch gekennzeichnet, dass** das Einstellen des Wassergehalts gemäß Verfahrensschritt c. im Zuge des Granulierens in Verfahrensschritt b. erfolgt, und/oder
**dadurch gekennzeichnet, dass** der Wassergehalt des Granulats auf weniger als 4 Gew.%, weniger als 3 Gew.%, weniger als 2 Gew.%, weniger als 1 Gew.% oder weniger als 0,5 Gew.%, bezogen auf das Gesamtgewicht des Granulats, eingestellt wird,
und/oder
**dadurch gekennzeichnet, dass** die wässrige Dispersion einen Feststoffanteil von 20 bis 60 Gew.%, insbesondere von 30 bis 50 Gew.% oder von 35 bis 45 Gew.%, bezogen auf das Gesamtgewicht der Dispersion, aufweist.

8. Verfahren nach einem der Ansprüche 6 oder 7, **dadurch gekennzeichnet, dass** das Granulieren der in a. bereitgestellten Dispersion mittels Sprühgranulation erfolgt,
wobei optional das Granulieren mittels Sprühgranulation in einem Wirbelschichtreaktor erfolgt,
wobei optional die Ablufttemperatur im Wirbelschichtreaktor weniger als 100 °C, insbesondere weniger als 50 °C oder weniger als 35 °C, beträgt,
wobei optional die Produkttemperatur im Wirbelschichtreaktor weniger als 80 °C, insbesondere weniger als 50 °C oder weniger als 35 °C, beträgt,
wobei optional die Zulufttemperatur im Wirbelschichtreaktor von 30 bis 150 °C, insbesondere von 50 bis 100 °C oder von 60 bis 80 °C, beträgt.

9. Verfahren nach einem der Ansprüche 6 bis 8, **dadurch gekennzeichnet, dass** das Bindemittel eine Mindestfilmbildetemperatur MFT von kleiner 20 °C, insbesondere von kleiner 15 °C, von kleiner 10 °C, von kleiner 5 °C oder von 0 °C, gemessen nach Norm ISO 2115, aufweist.

10. Granulat erhältlich durch ein Verfahren gemäß einem der Ansprüche 6 bis 9.

11. Verfahren zur Herstellung eines Anstrichmittels mindestens umfassend die Schritte
a. Bereitstellen eines Granulats gemäß einem der Ansprüche 1 bis 5 oder 10,
b. Mischen des Granulats mit Wasser zur Herstellung des Anstrichmittels.

12. Verfahren nach Anspruch 11, **dadurch gekennzeichnet, dass** das Gewichtsverhältnis von Granulat zu Wasser von 10:90 bis 90:10, insbesondere von 20:80 bis 80:20 oder von 30:70 bis 70:30 oder von 50:50 bis 65:35, beträgt.

13. Verwendung eines Granulats gemäß einem der Ansprüche 1 bis 5 oder 10 zur Herstellung eines Anstrichmittels, insbesondere wobei es sich bei dem Anstrichmittel um eine Dispersionsfarbe handelt.

14. Behälter zum Anmischen eines Anstrichmittels, wobei der Behälter ein Granulat gemäß einem der Ansprüche 1 bis 5 oder 10 umfasst.

15. Behälter nach Anspruch 14, **dadurch gekennzeichnet, dass** der Behälter so dimensioniert ist, dass er zur Aufnahme von Wasser und Anmischen eines Anstrichmittels geeignet ist,
und/oder
**dadurch gekennzeichnet, dass** der Behälter im Wesentlichen luftdicht verschließbar und zur Aufbewahrung des Anstrichmittels geeignet ist, wobei optional der Behälter wiederverschließbar ist,
und/oder
**dadurch gekennzeichnet, dass** der Behälter eine Markierung aufweist, die den Füllstand des einzufüllenden Wassers kennzeichnet.
